# EUROPÄISCHE PATENTANMELDUNG

(11) **EP 3 975 096 A1**
(43) Veröffentlichungstag der Anmeldung: **30.03.2022**
(21) Anmeldenummer: 21194508.4
(22) Anmeldetag: 02.09.2021
(51) Int. Cl.: G06Q 30/02, G06Q 50/06

(54) **VERMITTLUNGSEINRICHTUNG FÜR EINEN ENERGIEANSCHLUSS EINES VERBRAUCHERS AN EIN ENERGIENETZ**

(30) Priorität: 23.09.2020 DE 102020124811
(71) Anmelder: Kamp, Johannes, 83115 Neubeuern (DE)
(72) Erfinder: Kamp, Johannes, 83115 Neubeuern (DE)
(74) Vertreter: Grünecker Patent- und Rechtsanwälte PartG mbB

(57) **Zusammenfassung**

Die vorliegende Erfindung betrifft eine Vermittlungseinrichtung für einen Energieanschluss eines Verbrauchers an ein Energienetz, umfassend zumindest einen Zähler zur Erfassung eines Energieverbrauchs und/oder einer Energieeinspeisung in das Energienetz. Für eine verbesserte Einbindung der zunehmenden Anzahl dezentraler Energieerzeuger von emeuerbarer Energie weist die Vermittlungseinrichtung ein Kommunikationsmodul zum Datenaustausch mit Kommunikationsmodulen anderer Vermittlungseinrichtungen, wobei die ausgetauschten Daten Informationen über Menge und/oder Preis und/oder Zeitraum und/oder Energieart von verfügbarer und/oder benötigter Energie beinhalten, ein Einkaufsmodul, das zum Bezug von Energie Verkaufsangebote verschiedener Vermittlungseinrichtungen vergleicht und automatisiert eine Kaufentscheidung trifft, und/oder ein Verkaufsmodul, das zum Veräußern von Energie Kaufangebote verschiedener Vermittlungseinrichtungen vergleicht und automatisiert eine Verkaufsentscheidung trifft, und/oder ein Tauschmodul, das zum Tausch von Energie Tauschangebote verschiedener Vermittlungseinrichtungen vergleicht und automatisiert eine Tauschentscheidung trifft, auf. In nebengeordneten Aspekten gibt die vorliegende Erfindung eine Ladestation mit einer Schnittstelle zur Aufladung von Elektro- oder Hybridautos und mit einer solchen Vermittlungseinrichtung, sowie ein Vermittlungssystem mit mehreren solchen Vermittlungseinrichtungen an.

## Beschreibung

Die vorliegende Erfindung betrifft eine Vermittlungseinrichtung für einen Energieanschluss eines Verbrauchers an ein Energienetz, wobei die Vermittlungseinrichtung zumindest einen Zähler zur Erfassung eines Energieverbrauchs und/oder einer Energieeinspeisung in das Energienetz umfasst. Eine solche Vermittlungseinrichtung ist aus DE 10 2013 207 715 A1 bekannt.

Die aus DE 10 2013 207 715 A1 vorbekannte Vermittlungseinrichtung umfasst einen intelligenten Stromzähler, der den Energieanschluss des Verbrauchers mit dem Energienetz verbindet, in welches energiehandelnde Unternehmen aus unterschiedlichen Quellen erzeugte elektrische Energie einspeisen. Die Vermittlungseinrichtung fragt Informationen zu dem aktuellen Strompreis und dem Energiemix der energiehandelnden Unternehmen ab und speichert diese in einer Stromtarifdatenbank ab. Anhand eines Auswahlkriteriums des Verbrauchers und den Informationen der Stromtarifdatenbank wählt die Vermittlungseinrichtung automatisch ein energiehandelndes Unternehmen aus. Ist das ausgewählte Unternehmen ein anderes als jenes, über welches der Verbraucher aktuell Strom aus dem Energienetz bezieht, nimmt die Vermittlungseinrichtung automatisch einen Anbieterwechsel vor.

Der vorbekannte Stand der Technik bietet Raum zur Verbesserung und/oder für andere technische Lösungen.

Eine Aufgabe der vorliegenden Erfindung ist es daher eine Vermittlungseinrichtung der eingangsgenannten Art anzugeben. Vorzugsweise verbessert die erfindungsgemäße Vermittlungseinrichtung den vorbekannten Stand der Technik im Hinblick auf Effizienz und der Einbindung der zunehmenden Anzahl dezentraler Energieerzeuger von erneuerbarer Energie. Insbesondere will die vorliegende Erfindung einen umfassenderen Ansatz für die Ein- und Ausspeisung von Energie in bzw. aus einem Energienetz angeben. Dabei werden insbesondere die Speichermöglichkeiten / -kapazitäten (z.B. Akkus / H²-Speicher) der Energieanschlüsse berücksichtigt.

Zur Lösung dieser Aufgabenstellung schlägt die vorliegende Erfindung eine Vermittlungseinrichtung mit den Merkmalen von Anspruch 1 vor.

Die erfindungsgemäße Vermittlungseinrichtung umfasst einen Zähler, der den Energieanschluss des Verbrauchers mit dem Energienetz verbindet und den Energieverbrauch und/oder die Energieeinspeisung in das Energienetz erfasst, d.h. ein- bzw. ausgespeiste Energie in kWh, m³ oder Liter zählt. Der Energieanschluss kann privat, gewerblich oder kommunal sein. Er kann beispielsweise ein Ein- oder Mehrfamilienhaus mit elektrischer Energie versorgen, das in diesem Beispiel den Verbraucher darstellt. Der Zähler kann je nach Verbraucher ortsfest installiert, z.B. in einem Haus oder einer dezentralen Ladestation, oder mobil sein, z.B. in einem Fahrzeug oder einem Flugobjekt eingebaut sein. Er kann beispielsweise auch an einem Baustromanschluss vorgesehen sein. Vorzugsweise ist der Zähler per Funk oder GPS lokalisierbar.

Der Zähler weist in der Regel eine ID zur eindeutigen Identifizierung und gegenseitigen Erkennung auf. Die ID kann eine Nummer, die zum Beispiel die Postleitzahl beinhaltet, und/oder Buchstaben und/oder andere Ziffern aufweisen. Die ID kann insbesondere eine Ortskoordinate bzw. Ortskoordinaten des aktuellen Standorts des Zählers aufweisen, was insbesondere bei mobilen Verbrauchern wie Fahrzeugen und Flugobjekten vorteilhaft ist. In der Regel ist die ID elektronisch auslesbar. Mehrere Zähler können als eine Zählergruppe mit einer eigenen Gruppen-ID zusammengefasst sein. So ist auch die Vermittlungseinrichtung, je nach Anzahl der ihr zugeordneten Zähler entweder durch die Gruppen-ID oder durch die individuelle ID eines einzelnen Zählers eindeutig identifizierbar.

Der Verbraucher im Sinne der vorliegenden Anmeldung kann einen einzelnen oder mehrere Energie-Verbraucher sowie Energie-Erzeuger und/oder Energie-Speicher umfassen. Im Falle eines Wohnhauses als Verbraucher kann beispielsweise eine Photovoltaikanlage auf dem Dach des Hauses vorgesehen sein, die Strom erzeugt und in das Energienetz einspeist. Des Weiteren kann der Verbraucher einen Energie-Speicher umfassen, der die von z.B. der Photovoltaikanlage erzeugte elektrische Energie speichert. Der Verbraucher kann insbesondere eine Schnittstelle zur Aufladung von Elektro- oder Hybridautos und/oder anderer Akkus bzw. Energiespeicher mit elektrischer Energie aufweisen. Diese können vorzugsweise und je nach Bedarf in den Einkaufs- und Verkaufsprozess bzw. Tauschprozess eingebunden werden (siehe unten). Eine Ladestation mit einer solchen Schnittstelle kann auch für sich allein ein Verbraucher im Sinne der vorliegenden Anmeldung sein und in Kombination mit einer Vermittlungseinrichtung ein Aspekt der vorliegenden Anmeldung sein. Sie kann zur induktiven Aufladung angepasst eingerichtet sein. Die Ladestation hat in der Regel eine Erkennungseinrichtung zum Erkennen einer Chipkarte (z.B. EC-Karte oder Kreditkarte) und/oder einer ID (z.B. Personalausweis) oder eines anderen Mittels zur Authentifizierung, sodass die Nutzung der Ladestation und die daraus resultierenden Kosten eindeutig einem Benutzer zugeordnet werden können. So ist die erfindungsgemäße Vermittlungseinrichtung, sofern Sie in der zuvor skizzierten Ladestation vorgesehen ist, einer breiten Anzahl unterschiedlicher Teilnehmer zugänglich, insbesondere auch solchen Teilnehmern, die nicht selbst eine Vermittlungseinrichtung nach der vorliegenden Erfindung besitzen.

Auch ein mobiles Gerät, ein Fahrzeug, ein Flugobjekt, oder ein sonstiges zur Fortbewegung auf Land, zu bzw. in Wasser und/oder in der Luft angepasstes Objekt mit einer Ladeschnittstelle können für sich genommen ein Verbraucher im Sinne der vorliegenden Anmeldung sein und mit der erfindungsgemäßen Vermittlungseinrichtung ausgestattet werden.

Verbraucher im Sinne der vorliegenden Erfindung gehören üblicherweise zu Endkunden von Energieversorgungsunternehmen. Die erfindungsgemäße Vermittlungseinrichtung ist üblicherweise am Übergang zwischen dem öffentlichen Versorgungsnetz und der privaten Verkabelung beispielsweise eines Hauses vorgesehen.

In der Regel ist das Energienetz nach der vorliegenden Anmeldung ein Netz mit elektrischer Energie, sprich ein Stromnetz. Der Zähler ist insofern für gewöhnlich ein Stromzähler. Grundsätzlich kann das Energienetz aber auch ein Netz mit einem flüssigen oder gasförmigen Energieträger sein.

Nach der vorliegenden Erfindung umfasst die Vermittlungseinrichtung ein Kommunikationsmodul zum Datenaustausch mit Kommunikationsmodulen anderer Vermittlungseinrichtungen, wobei die ausgetauschten Daten Informationen über Menge und/oder Preis und/oder Zeitraum und/oder Energieart von verfügbarer und/oder benötigter Energie beinhalten, ein Einkaufsmodul, das zum Bezug von Energie Verkaufsangebote verschiedener Vermittlungseinrichtungen vergleicht und automatisiert eine Kaufentscheidung trifft, und/oder ein Verkaufsmodul, das zum Veräußern von Energie Kaufangebote verschiedener Vermittlungseinrichtungen vergleicht und automatisiert eine Verkaufsentscheidung trifft, und/oder ein Tauschmodul, das zum Tausch von Energie Tauschangebote verschiedener Vermittlungseinrichtungen vergleicht und automatisiert eine Tauschentscheidung trifft. Diese Module ermöglichen eine Preisvereinbarung zwischen einem Anbieter und einem Nachfrager oder einen Tausch von Energie. Zu den ausgetauschten Daten gehören in der Regel auch die Leitungsstrecke zwischen dem Anbieter und dem Nachfrager sowie die Leitungskapazität dieser Leitungsstrecke.

Das Kommunikationsmodul der Vermittlungseinrichtung weist eine Schnittstelle zum Aufbau einer Datenübertragungsverbindung auf. Die Datenübertragungsverbindung kann eine Datenübertragungsverbindung über das Stromnetz, insbesondere eine Powerline-Communication-Verbindung, eine Mobilfunk-Datenübertragungsverbindung (z.B. Bluetooth), eine Datenübertragungsverbindung über ein Telefonnetz, eine Datenübertragungsverbindung über ein Bus-System (z.B. ein Inhouse-Bus-System), und/oder eine Datenübertragungsverbindung über das Internet mittels WLAN oder LAN sein. Die ausgetauschten Daten können - wie aus DE 10 2013 207 715 A1 bekannt - auf einer Speichereinrichtung, wie etwa ein FPGA, ein Flash-Datenspeicher, ein RAM-Datenspeicher, eine Festplatte, eine SSD oder dergleichen gespeichert werden. Auch Informationen über die Art der Energieerzeugung - beispielsweise nuklear, erneuerbar oder Verbrennung fossiler Energieträger wie Kohle oder Gas - und/oder Standort der energieerzeugenden Quelle können Bestandteil der ausgetauschten Daten sein. Zusätzlich oder alternativ kann der Zähler einen eigenen Datenspeicher aufweisen, dessen Kapazität in der Regel dafür ausreicht, die übermittelten Daten der letzten z.B. 24 Stunden zu sichern.

Das Einkaufs- und/oder Verkaufsmodul bzw. das Tauschmodul sind dazu angepasst eingerichtet, die ausgetauschten Daten zu vergleichen und anhand eines Auswahlkriteriums automatisiert eine Kaufentscheidung bzw. eine Verkaufsentscheidung oder eine Tauschentscheidung zu treffen. Üblicherweise ist das Auswahlkriterium einstellbar. In der Regel kann das Einkaufsmodul so eingestellt werden, dass benötigte Energie zu dem aktuell günstigsten Preis eingekauft wird. Entsprechend kann das Verkaufsmodul für gewöhnlich so eingestellt werden, das verfügbare Energie zu dem aktuell höchsten Gebot verkauft wird. Alternativ oder zusätzlich kann als Auswahlkriterium z.B. ein Mindestanteil an regenerativer Energien für das Einkaufsmodul eingestellt werden. Das Verkaufsmodul kann den Preis für verkaufte Energie in einer zeitlich beschränkten Versteigerung durch das Höchstgebot festlegen und an den Höchstbietenden verkaufen. Insbesondere während des Urlaubs oder an Wochenenden, also zu Zeiten, an denen weniger Strom benötigt wird, kann mehr Strom verkauft werden. Das Tauschmodul kann so eingestellt sein, dass Energie derselben Energieform, beispielsweise Strom, getauscht wird. Dabei wird in der Regel der Energiebedarf eines ersten Tauschpartners zu einem bestimmten Zeitpunkt durch Energie eines zweiten Tauschpartners gedeckt und die Energie des zweiten Tauschpartners zu einem anderen Zeitpunkt durch Energie des ersten Tauschpartners gedeckt. Das Tauschmodul kann aber auch so eingestellt sein, dass Energie unterschiedlicher Energieform gegeneinander getauscht werden, beispielsweise Strom im Tausch gegen Gas oder Wasserstoff. Dabei kann sich der Zeitpunkt bzw. die Dauer des Energietransfers auch überschneiden, da in der Regel unterschiedliche Netze für die unterschiedlichen Energieträger genutzt werden.

Auch die Länge der Leitungsstrecke zur Energieübertragung zwischen Anbieter und Nachfrager können ein Auswahlkriterium sein. So kann nach diesem Auswahlkriterium beispielsweise ein Nachbarbedarf zuerst gedeckt werden. Des Weiteren kann die Kapazität der Leitungsstrecke zwischen Anbieter und Nachfrager ein Auswahlkriterium sein. Üblicherweise ist die erfindungsgemäße Auswahleinrichtung derart eingerichtet, dass eine Gewichtung der einzelnen Auswahlkriterien eingestellt werden kann. Vorzugsweise ermöglicht die Berücksichtigung von Leitungsstrecke und Leitungskapazität unterschiedliche Betriebsmodi, wie z.B. gleichmäßiges Runterregeln, schnelles Laden oder langsames Laden.

In der Regel sind die Module der vorliegenden Erfindung mit dem Zähler nach Anspruch 1 zu einem intelligenten Stromzähler zusammengefasst, der üblicherweise als bauliche Einheit vorgesehen ist. Bevorzugt ist zumindest eines der Module selbstlernend. Besonders bevorzugt ist der intelligente Stromzähler als eine künstliche Intelligenz charakterisierbar, die die von den Modulen generierten Informationen zu einem Gesamtbild fügt, aus welchem Erfahrungswerte zur Verbesserung von Vorhersagen abgeleitet und welches mit ständigem Nachfließen neuerer Informationen aktualisiert wird. Der intelligente Stromzähler kann zusätzlich zu einem bereits vorhandenen stationären oder mobilen Zähler vorgesehen sein oder diesen Zähler ersetzen. In einem Privathaushalt beispielsweise kann der intelligente Stromzähler an die von dem vorhandenen Zähler hausseitig abgehenden Leitung angeschlossen werden.

Die Vermittlungseinrichtung nach der vorliegenden Erfindung ermöglicht eine effizientere Ein- und Ausspeisung von Energie in bzw. aus dem Energienetz. Beispielsweise kann ein Einfamilienhaus mit einer Photovoltaikanlage, welches an einem sonnigen Tag mehr Strom erzeugt als das Einfamilienhaus verbraucht oder speichern kann, dem Nachbarn, der keine Photovoltaikanlage hat und ein Elektroauto über seine Ladestation aufladen möchte, direkt den für das Aufladen des Elektroautos benötigten Strom an den Nachbarn abgeben. So kann der dezentral erzeugte erneuerbare Strom im Wesentlichen dort genutzt werden wo er erzeugt wird. So können Leitungskosten und Leitungsverluste verringert werden. Die Leitungskosten werden für gewöhnlich von dem Einkaufs- und dem Verkaufsmodul bzw. dem Tauschmodul berücksichtigt.

Bevorzugt umfasst die Vermittlungseinrichtung nach der vorliegenden Erfindung ein Abrechnungsmodul, das für die einzelnen Ein -bzw. Verkäufe automatisch eine Abrechnung erzeugt. Der Abrechnungszeitraum ist üblicherweise wählbar. Die Abrechnung kann in einem bevorzugt einstellbaren Zeitintervall, beispielsweise im Monatsrhythmus, und/oder nach einem Wechsel der Energieart, z.B. von Kernenergie auf Windenergie, erfolgen. Weiter bevorzugt ist das Abrechnungsmodul zur automatischen elektronischen Zustellung der Abrechnung, beispielsweise per E-Mail, angepasst eingerichtet, so wie es an sich für Telefonrechnungen bekannt ist.

Nach einer bevorzugten Weiterbildung der vorliegenden Erfindung berücksichtigt das Einkaufsmodul und/oder das Verkaufsmodul und/oder das Tauschmodul bei der Kaufs- bzw. Verkaufsentscheidung oder Tauschentscheidung die Kaufs- bzw. Verkaufsangebote oder Tauschangebote einer Energiebörse. Die Energiebörse ist in der Regel eine in der Region des Energieanschlusses handelnde Strombörse, beispielsweise die European Energy Exchange (EEX) für Energieanschlüsse in Deutschland. Das Prinzip der Energiebörse ist ähnlich zu der der Aktienbörse. Das Einkaufsmodul kann so eingerichtet sein, dass ein Verkaufsangebot anderer Vermittlungseinrichtungen nur dann angenommen wird, wenn der Preis geringer ist oder in etwa dem Preis entspricht, der auf der Strombörse für dieselbe Menge Strom für einen gewissen Zeitraum zu zahlen ist. Entsprechend kann das Verkaufsmodul so eingerichtet sein, dass ein Kaufangebot anderer Vermittlungseinrichtungen nur dann angenommen wird, wenn der Preis höher ist oder in etwa dem Preis entspricht, der auf der Strombörse für dieselbe Menge Strom für einen gewissen Zeitraum gezahlt wird.

Nach einer weiteren bevorzugten Weiterbildung der vorliegenden Erfindung umfasst die Vermittlungseinrichtung ein Erfahrungsmodul, dass aufgrund eines Nutzerverhaltens des Verbrauchers eine Vorhersage für zukünftig veräußerbare Energie (d.h. in der Regel Energiemenge und Energieart) und/oder zukünftig zu beziehende Energie trifft, und die Vorhersage an das Einkaufsmodul und/oder das Verkaufsmodul und/oder das Tauschmodul weiterleitet. In der Regel erkennt das Erfahrungsmodul Routinen, beispielsweise dass der Verbraucher an einem bestimmten Wochentag oft zur selben Zeit das Elektroauto oder ein anderes mobiles Gerät/Objekt auflädt. Aus diesen Erkenntnissen leitet das Erfahrungsmodul seine Vorhersagen ab. Das Einkaufsmodul und/oder das Verkaufsmodul und/oder das Tauschmodul ist in der Regel derart eingerichtet, dass der Einkauf bzw. Verkauf oder Tausch von Energie optimal auf die Vorhersagen des Erfahrungsmoduls abgestimmt ist. Beispielsweise kann der Verkauf von Energie über das Verkaufsmodul an dem Wochentag, an dem oft das Elektroauto aufgeladen wird, erst dann erfolgen, wenn genug Energie für einen Ladevorgang des Elektroautos in einem Energie-Speicher des Verbrauchers gespeichert wurde. Genauso gut kann für diesen Wochentag vorausschauend günstige Energie durch das Einkaufsmodul eingekauft und in dem Energie-Speicher gespeichert werden.

Nach einer weiterenbevorzugten Weiterbildung der vorliegenden Erfindung umfasst die Vermittlungseinrichtung ein Wettervorhersagemodul, das aufgrund von öffentlich verfügbaren Wetterdaten eine Vorhersage für zukünftig veräußerbare Energie und/oder zukünftig zu beziehende Energie trifft, und die Vorhersage an das Einkaufsmodul und/oder das Verkaufsmodul und/oder das Tauschmodul weiterleitet. Das Einkaufsmodul und/oder das Verkaufsmodul und/oder das Tauschmodul ist in der Regel derart eingerichtet, dass der Einkauf bzw. Verkauf oder der Tausch von Energie optimal auf die Vorhersagen des Wettervorhersagemoduls abgestimmt ist. So kann das Einkaufsmodul beispielsweise bei Vorhersage anhaltend hoher veräußerbarer Energie die aktuell über den Eigenverbrauch hinausgehende Energie im Grunde restlos verkaufen und/oder bei Vorhersage anhaltend niedriger verfügbare Energie die aktuell über den Eigenverbrauch hinausgehende Energie in einem Energie-Speicher speichern. Insbesondere in Verbindung mit dem Erfahrungsmodul ermöglicht die Vermittlungseinrichtung nach dieser Weiterbildung ein besonders effizientes Energiemanagement.

Nach einer weiteren bevorzugten Weiterbildung der vorliegenden Erfindung umfasst die Vermittlungseinrichtung ein Marktbeobachtungsmodul, das aufgrund von Erfahrungswerten eines Marktverhaltens eine Vorhersage für zukünftig veräußerbare Energie und/oder zukünftig zu beziehende Energie trifft, und die Vorhersagen an das Einkaufsmodul und/oder das Verkaufsmodul und/oder das Tauschmodul weiterleitet. Dabei erkennt das Marktbeobachtungsmodul in der Regel Muster, die durch das Verhalten einzelner Marktteilnehmer in bestimmten klimatischen, politischen, wirtschaftlichen, kulturellen und/oder sozialen Verhältnissen oder Ereignisse entstehen. Die dadurch gewonnenen Erkenntnisse werden für die Vorausberechnung des zu erwartenden Energieangebots und/oder-bedarfs und der damit zu erwartenden Preisentwicklung verwendet. Mit dieser Weiterbildung wird die Effizienz des Energiemanagements durch eine verbesserte Vorhersage der veräußerbaren und/oder zu beziehenden bzw. zu Verfügung stehenden Energie weiter erhöht. Beispielsweise kann ein zeitlich begrenzter erhöhter Energiebedarf, etwa durch die Ansetzung einer Großveranstaltung, vorhergesagt und für die Vorausberechnung des zu erwartenden Energieangebots und/oder -bedarfs und der damit zu erwartenden Preisentwicklung verwendet werden.

Nach einer weiteren bevorzugten Weiterbildung der vorliegenden Erfindung umfasst die Vermittlungseinrichtung ein steuerungsmäßig mit einem Energie-Verbraucher, einem Energie-Erzeuger und/oder einem Energie-Speicher des Verbrauchers verbundenes Managermodul, das einen Betrieb des Energie-Verbrauchers, des Energie-Erzeugers und/oder des Energie-Speichers zeitlich steuert. So kann die Steuerung des Managermoduls einen Notstrommodus beinhalten, mit dem auf Schwankungen oder Ausfälle in dem Energienetz reagiert werden kann und in dem, abgesehen von wichtigen Geräten wie beispielsweise Kühlschrank oder Alarmanlage, die Energie-Verbraucher vom Netz getrennt werden. Des Weiteren kann die Steuerung des Managermoduls, bevorzugt in Abstimmung mit dem Bussystem, so eingerichtet sein, dass nicht-zeitkritischer Verbrauch, in der Regel das Aufladen eines Energie-Speichers, auf Zeiten mit verfügbarer günstiger Energie verschoben bzw. für diese Zeiten geplant wird.

Nach einer weiteren bevorzugten Weiterbildung der vorliegenden Erfindung umfasst die Vermittlungseinrichtung eine Stromversorgung zur Versorgung der Module mit elektrischer Energie, wobei die Vermittlungseinrichtung, vorzugsweise der Zähler, üblicherweise eine Ersatzstromversorgung aufweist. In der Regel sind die Module über zumindest eine Stromleitung mit dem Energienetz und/oder einem Energie-Erzeuger und/oder einem Energie-Speicher verbunden. Zusätzlich oder alternativ kann eine Batterie oder ein Akku als Ersatzstromversorgung vorgesehen sein, die vorzugsweise aufladbar sind. So ist die Betriebssicherheit der Vermittlungseinrichtung, insbesondere des Zählers, sichergestellt.

Nach einer weiteren bevorzugten Weiterbildung der vorliegenden Erfindung weist die Vermittlungseinrichtung eine Schnittstelle für ein Endgerät und/oder für einen Server zur Auswertung und/oder Anzeige der Moduldaten auf. Das Endgerät kann beispielsweise ein Computer mit Bildschirm, ein Laptop, ein Tablet oder ein Smartphone sein. Über das Endgerät kann die Wartung der einzelnen Module oder die Festlegung von Auswahlkriterien oder Festpreisen durch eine Person vorgenommen werden. Die Wartung kann insbesondere remote erfolgen. Das Aufspielen von Updates wird in der Regel automatisch oder bei entsprechender Einstellung durch den Nutzer manuell durchgeführt.

In einem nebengeordneten Aspekt gibt die vorliegende Erfindung ein Vermittlungssystem für Energieanschlüsse von Verbrauchern an ein Energienetz an, das mehrere je einem Energieanschluss zugeordnete und zum Datenaustausch untereinander vernetzte erfindungsgemäße Vermittlungseinrichtungen aufweist, die bevorzugt nach einer der zuvor genannten Weiterbildungen ausgestaltet sind. Weiter bevorzugt sind die Zähler der Vermittlungseinrichtungen über die zugordneten IDs zur gegenseitigen Erkennung eindeutig identifizierbar.

Weitere Einzelheiten und Vorteile der vorliegenden Erfindung ergeben sich aus der nachfolgenden Beschreibung eines Ausführungsbeispiels.

Nach einem Ausführungsbeispiel der vorliegenden Erfindung ist der Zähler der Vermittlungseinrichtung ein Stromzähler und die Vermittlungseinrichtung ist in einem am Hausanschluss vorgesehenen Hausanschlusskasten eines Wohnhauses vorgesehen. Der Hausanschluss ist die Schnittstelle zwischen dem öffentlichen Verteilungsnetz und der Verbraucheranlage. Überwiegend wird heutzutage der Anschluss des Hauses an das öffentliche Verteilungsnetz per Erdkabel hergestellt. Der Hausanschlusskasten ist daher überwiegend im Keller bzw. in der untersten Etage des Wohnhauses vorgesehen.

Nach dem Ausführungsbeispiel weist das Kommunikationsmodul eine Schnittstelle zum Aufbau einer Datenübertragungsverbindung mit den Kommunikationsmodulen der im Keller bzw. in der untersten Etage der Nachbarwohnhäuser vorgesehenen Vermittlungseinrichtungen auf.

## Patentansprüche

1. Vermittlungseinrichtung für einen Energieanschluss eines Verbrauchers an ein Energienetz, umfassend
zumindest einen Zähler zur Erfassung eines Energieverbrauchs und/oder einer Energieeinspeisung in das Energienetz, **gekennzeichnet durch**
ein Kommunikationsmodul zum Datenaustausch mit Kommunikationsmodulen anderer Vermittlungseinrichtungen, wobei die ausgetauschten Daten Informationen über Menge und/oder Preis und/oder Zeitraum und/oder Energieart von verfügbarer und/oder benötigter Energie beinhalten,
ein Einkaufsmodul, das zum Bezug von Energie Verkaufsangebote verschiedener Vermittlungseinrichtungen vergleicht und automatisiert eine Kaufentscheidung trifft, und/oder
ein Verkaufsmodul, das zum Veräußern von Energie Kaufangebote verschiedener Vermittlungseinrichtungen vergleicht und automatisiert eine Verkaufsentscheidung trifft, und/oder
ein Tauschmodul, das zum Tausch von Energie Tauschangebote verschiedener Vermittlungseinrichtungen vergleicht und automatisiert eine Tauschentscheidung trifft.

2. Vermittlungseinrichtung nach Anspruch 1, **dadurch gekennzeichnet, dass** das Einkaufsmodul und/oder das Verkaufsmodul und/oder das Tauschmodul bei der Kaufs- bzw. Verkaufsentscheidung oder der Tauschentscheidung die Kaufs- bzw. Verkaufsangebote oder Tauschangebote einer Energiebörse mitberücksichtigt.

3. Vermittlungseinrichtung nach Anspruch 1 oder 2, **gekennzeichnet durch** ein Erfahrungsmodul, das aufgrund eines Nutzerverhaltens des Verbrauchers eine Vorhersage für zukünftig veräußerbare Energie und/oder zukünftig zu beziehende Energie trifft und die Vorhersage an das Einkaufsmodul, das Verkaufsmodul und/oder das Tauschmodul weiterleitet.

4. Vermittlungseinrichtung nach einem der Ansprüche 1 bis 3, **gekennzeichnet durch** ein Wettervorhersagemodul, das aufgrund von öffentlich verfügbaren Wetterdaten eine Vorhersage für zukünftig veräußerbare Energie und/oder zukünftig zu beziehende Energie trifft und die Vorhersage an das Einkaufsmodul, das Verkaufsmodul und/oder das Tauschmodul weiterleitet.

5. Vermittlungseinrichtung nach einem der vorherigen Ansprüche, **gekennzeichnet durch** ein Marktbeobachtungsmodul, das aufgrund von Erfahrungswerten eines Marktverhaltens eine Vorhersage für zukünftig veräußerbare Energie und/oder zukünftig zu beziehende Energie trifft und die Vorhersage an das Einkaufsmodul, das Verkaufsmodul und/oder das Tauschmodul weiterleitet.

6. Vermittlungseinrichtung nach einem der vorherigen Ansprüche, **gekennzeichnet durch** ein steuerungsmäßig mit einem Energie-Verbraucher und/oder einem Energie-Erzeuger und/oder einem Energie-Speicher des Verbrauchers verbundenes Managermodul, das einen Betrieb des Energie-Verbrauchers und/oder des Energie-Erzeugers und/oder des Energie-Speichers zeitlich steuert.

7. Vermittlungseinrichtung nach einem der vorherigen Ansprüche, **gekennzeichnet durch** einen intelligenten Stromzähler, der den Zähler nach Anspruch 1 und die Module nach einem der vorherigen Ansprüche aufweist und/oder **dadurch gekennzeichnet, dass** zumindest eines der Module selbstlernend ist.

8. Vermittlungseinrichtung nach einem der vorherigen Ansprüche, **gekennzeichnet durch** eine Stromversorgung zur Versorgung der Module mit elektrischer Energie, wobei die Vermittlungseinrichtung vorzugsweise eine Ersatzstromversorgung aufweist.

9. Vermittlungseinrichtung nach einem der vorherigen Ansprüche, **gekennzeichnet durch** eine Schnittstelle für ein Endgerät und/oder für einen Server zur Auswertung und/oder Anzeige der Moduldaten.

10. Vermittlungseinrichtung nach einem der vorherigen Ansprüche, **dadurch gekennzeichnet, dass** der Zähler eine ID mit einer Ortskoordinate zur eindeutigen Identifizierung aufweist und/oder ein mobiler Zähler ist und/oder dass der Zähler über Funk oder GPS lokalisierbar ist.

11. Vermittlungseinrichtung nach einem der vorherigen Ansprüche, **gekennzeichnet durch** eine Auswahleinrichtung zur Gewichtung mehrerer Auswahlkriterien für eine Kaufs- bzw. Verkaufsentscheidung oder einer Tauschentscheidung des Einkaufsmoduls bzw. des Verkaufsmoduls oder des Tauschmoduls, wobei vorzugsweise ein Auswahlkriterium eine Länge der benötigten Leitungsstrecke und/oder eine Leitungskapazität zur Übertragung von Energie zwischen der Vermittlungseinrichtung und einem anderen Energie-Anbieter bzw. Energie-Nachfrager ist.

12. Ladestation mit einer Schnittstelle zur Aufladung von Elektro- oder Hybridautos, **gekennzeichnet durch** eine Vermittlungseinrichtung nach einem der vorherigen Ansprüche.

13. Vermittlungssystem für Energieanschlüsse von Verbrauchern an ein Energienetz, **gekennzeichnet durch** mehrere je einem Energieanschluss zugeordnete und zum Datenaustausch untereinander vernetzte Vermittlungseinrichtungen nach einem der Ansprüche 1 bis 11.
